# FASCICULE DE BREVET EUROPEEN

(11) **EP 3 361 055 B1**
(45) Date de publication et mention de la délivrance du brevet: **26.06.2019**
(21) Numéro de dépôt: 18151686.5
(22) Date de dépôt: 15.01.2018
(51) Int. Cl.: F01D 9/04, F01D 11/00, F01D 15/12, F01D 25/10, F01D 25/14, F04D 29/58, F01D 25/16, F02C 7/047, F01D 25/02, F01D 5/14, F01D 11/02, F01D 25/24, F02C 7/06, F02C 7/14, F04D 29/44, F01D 11/24

(54) **ENSEMBLE DE TURBOMACHINE AXIALE ET PROCÉDÉ DE CONTRÔLE DE JEUX CORCONFÉRENTIELS**
ANORDNUNG EINER AXIALEN TURBOMASCHINE UND VERFAHREN ZUR REGELUNG VON UMFANGSSPALTEN
ASSEMBLY OF AN AXIAL TURBOMACHINE AND METHOD OF CONTROLLING CIRCUMFERENTIAL GAPS

(30) Priorité: 26.01.2017 BE 201705049
(43) Date de publication de la demande: 15.08.2018
(73) Titulaire: Safran Aero Boosters SA, 4041 Herstal (BE)
(72) Inventeur: HIERNAUX, Stéphane, 4680 Oupeye (BE)
(74) Mandataire: Lecomte & Partners

(56) Documents cités:
- EP-A1- 2 505 789
- EP-A1- 3 043 028
- FR-A1- 2 629 867

## Description

### Domaine technique

L'invention se rapporte au domaine de l'étanchéité d'une virole interne segmentée. Plus précisément, l'invention concerne l'étanchéité entre deux segments de virole interne pour turbomachine. L'invention a également trait à une turbomachine axiale, notamment un turboréacteur d'avion ou un turbopropulseur d'aéronef.

### Technique antérieure

Dans un turboréacteur, un rotor aubagé monobloc de compresseur impose de recourir une architecture de carter externe en deux coquilles afin de permettre le montage du stator. En complément, les viroles internes doivent être scindées angulairement. Chaque virole interne de redresseur présente alors des coupures ou séparations. Celles-ci délimitent les segments voisins selon la circonférence. Ces séparations forment des passages parasites occasionnant des fuites.

Le document EP 3 018 295 A1 divulgue un turboréacteur comprenant un compresseur basse pression, une démultiplication et une soufflante. Le compresseur comporte plusieurs redresseurs présentant chacun une rangée annulaire d'aubes statoriques reliant une virole interne à un carter externe en demis-coquilles. Les demi-coquilles comme la virole interne sont réalisées en matériau composite. Par ailleurs, la virole interne est segmentée et montre des écarts angulaires entre ses segments. Ces mêmes écarts angulaires, ou fentes, sont fermés de manière étanche par des plateformes de caissons aubagés formant en outre une surface de guidage lisse au contact du flux primaire. Toutefois, cet agencement est complexe et lourd. Il ajoute des hétérogénéités dans le redresseur ainsi que de contraintes géométriques. Par ailleurs, certaines fuites peuvent subsister aux interfaces avec les plateformes internes et même aux extrémités circonférentielles des segments en raison de l'écart entre les léchettes du rotor.

Le document EP3043028A1 divulgue des plateformes d'aubes séparées par des jeux circonférentiels en forme de « S ». Les jeux circonférentiels sont réduits grâce à la pression dynamique du fluide sur les aubes.

Le document EP2505789A1 divulgue un turboréacteur comprenant un séparateur d'un flux gazeux en un premier flux et un deuxième flux. Un réducteur est refroidi par un circuit de lubrification.

Le document FR2629867A1 divulgue un dispositif de contrôle de jeu dans un moteur à turbine à gaz. Le dispositif comprend des moyens pour fournir au rotor un fluide de transfert de la chaleur, un moyen pour faire varier l'écoulement et un moyen pour contrôler le précédent moyen en fonction de la conductivité thermique du fluide.

### Résumé de l'invention

### Problème technique

L'invention a pour objectif de résoudre au moins un des problèmes posés par l'art antérieur. Plus précisément, l'invention a pour objectif de simplifier l'étanchéité entre des segments angulaires de virole interne tout en préservant l'aérodynamisme lors du fonctionnement de la turbomachine. L'invention a également pour objectif de proposer une solution résistante, légère, économique, fiable, facile à produire, commode d'entretien, d'inspection aisée, et améliorant le rendement.

### Solution technique

L'invention a pour objet un ensemble pour turbomachine axiale, notamment pour turboréacteur, l'ensemble comprenant : une virole externe et une virole interne coaxiales, la virole interne étant segmentée et comprenant des jeux circonférentiels entre ses segments ; une rangée annulaire d'aubes reliant la virole interne à la virole externe ; une transmission à rapport de réduction destinée à être couplée à une soufflante; remarquable en ce qu'il comprend en outre un circuit de refroidissement de la transmission configuré pour réchauffer au moins la virole externe lors du fonctionnement de la turbomachine de sorte à réduire circonférentiellement les jeux circonférentiels entre les segments.

Selon des modes avantageux de l'invention, l'ensemble peut comprendre une ou plusieurs des caractéristiques suivantes, prises isolément ou selon toutes les combinaisons techniques possibles :

L'ensemble comprend un bec de séparation circulaire auquel la virole externe est fixée, le circuit de refroidissement étant configuré pour dégivrer ledit bec de séparation.

La virole externe comprend un matériau composite avec une résine organique et des fibres, notamment des fibres de carbone et/ou des fibres de verre.

Au moins une ou plusieurs aubes sont métalliques et/ou à mémoire de forme.

Le circuit de refroidissement est configuré pour réchauffer les aubes.

Le circuit de refroidissement comprend un échangeur de chaleur, notamment en contact thermique avec les aubes et/ou avec la virole externe.

Au moins un ou chaque jeu circonférentiel forme généralement une droite inclinée dans l'espace par rapport à l'axe de révolution des viroles et/ou de rotation de la turbomachine selon deux angles.

La virole interne présente une surface annulaire externe avec une variation de diamètre.

Les aubes présentent une variation de hauteur radiale d'amont en aval.

La virole interne entoure la transmission.

Les aubes sont réalisées en un matériau différent de la virole externe.

Les aubes présentent un coefficient de dilatation supérieur au coefficient de dilatation de la virole externe.

La transmission est un réducteur, notamment épicycloïdal.

Le circuit de refroidissement est un circuit de lubrification de la transmission et comprend de l'huile circulant de la transmission à la virole externe et/ou à la virole interne.

La virole comprend au moins : deux, quatre, huit segments et jeux formant une alternance.

L'invention a également pour objet un turboréacteur, notamment un turboréacteur double flux, comprenant un ensemble, remarquable en ce que l'ensemble est conforme à l'invention, le turboréacteur comprenant notamment une soufflante et un compresseur.

Selon des modes avantageux de l'invention, le turboréacteur peut comprendre une ou plusieurs des caractéristiques suivantes, prises isolément ou selon toutes les combinaisons techniques possibles :

Le turboréacteur comprend un carter supportant la soufflante et la virole externe, la transmission étant éventuellement disposée dans ledit carter.

La transmission est une réduction apte à réduire une vitesse de rotation de soufflante par rapport à un premier arbre, notamment un arbre de turbine.

La transmission est apte à augmenter la vitesse de rotation du compresseur par rapport à un premier arbre.

La transmission est couplée à la soufflante et au compresseur, la vitesse de rotation du compresseur étant supérieure à la vitesse de rotation de la soufflante.

La virole interne et la virole externe définissent entre elles l'entrée du compresseur.

Le turboréacteur/qu'il présente un taux de dilution supérieur ou égal à : 5, ou 10, ou 15.

Le compresseur est un compresseur basse pression.

L'invention a également pour objet un procédé de contrôle de jeux circonférentiels entre des segments de virole interne de turboréacteur, le turboréacteur comprenant un ensemble qui comporte : une transmission à rapport de réduction entrainant une soufflante, une virole interne segmentée par des jeux circonférentiels, une virole externe et une rangée annulaire d'aubes reliant la virole interne à la virole externe, le procédé comprenant une étape (a) fonctionnement de la turbomachine, et une étape (b) échange thermique, remarquable en ce que la turbomachine comprend également un circuit d'échange thermique avec la transmission, la virole externe et/ou les aubes; lors de l'étape (b) échange thermique le circuit permet de réduire les jeux circonférentiels entre les segments de virole interne, l'ensemble étant éventuellement conforme à l'invention, et/ou le turboréacteur étant éventuellement conforme à l'invention

Selon un mode avantageux de l'invention, lors de l'étape (b) échange thermique, les jeux circonférentiels sont fermés ; notamment par dilatation et/ou par changement de forme d'un matériau à mémoire de forme ; les segments se touchant éventuellement selon la circonférence.

Selon un mode avantageux de l'invention, le procédé comprend en outre une étape (c) arrêt du turboréacteur, les jeux circonférentiels étant davantage ouverts lors de l'étape (c) arrêt que lors de l'étape (b) échange thermique.

De manière générale, les modes avantageux de chaque objet de l'invention sont également applicables aux autres objets de l'invention. Chaque objet de l'invention est combinable aux autres objets, et les objets de l'invention sont également combinables aux modes de réalisation de la description, qui en plus sont combinables entre eux, selon toutes les combinaisons techniques possibles.

### Avantages apportés

Coupler thermiquement la virole externe à la transmission permet de l'asservir thermiquement aux efforts mécaniques que fourni la soufflante. Dès que la soufflante fourni un travail mécanique important, la dilatation de la virole externe et des aubes permet de déformer plus rapidement la virole interne, et donc de refermer les jeux entre ses segments. L'étanchéité étant améliorée, le rendement devient optimal dès que la soufflante monte en puissance. Le temps de réponse est réduit, par exemple en fonction du mode de fonctionnement.

L'invention offre donc un ensemble intelligent en ce sens que la fermeture des jeux est conduite - automatiquement - par les sollicitations du turboréacteur. Le rendement est optimisé lorsque le fonctionnement devient exigeant et critique, malgré la contrainte de dilatation entre la configuration à l'arrêt et la configuration en fonctionnement. Le rendement peut être optimisé pour le décollage et pour le vol de croisière.

### Brève description des dessins

La figure 1 représente une turbomachine axiale selon l'invention.
La figure 2 est un schéma d'un ensemble de turbomachine selon l'invention.
La figure 3 illustre un agrandissement d'une partie de l'ensemble de la figure 2 selon l'invention.
La figure 4 montre deux segments voisins de l'ensemble selon l'invention.
La figure 5 est un diagramme du procédé de contrôle de jeux circonférentiels entre des segments de virole interne de turboréacteur.

### Description des modes de réalisation

On aura bien compris que l'invention propose un turboréacteur avec une soufflante entrainée par une transmission formant une source chaude dont les calories influent, via un circuit de refroidissement et/ou de lubrification, sur la taille des jeux circonférentiels entre des segments de virole interne qui est rattachée à des aubes statoriques.

Dans la description qui va suivre, les termes « interne » et « externe » renvoient à un positionnement par rapport à l'axe de rotation d'une turbomachine axiale. La direction axiale correspond à la direction le long de l'axe de rotation de la turbomachine. La direction radiale est perpendiculaire à l'axe de rotation. L'amont et l'aval sont en référence au sens d'écoulement principal du flux dans la turbomachine.

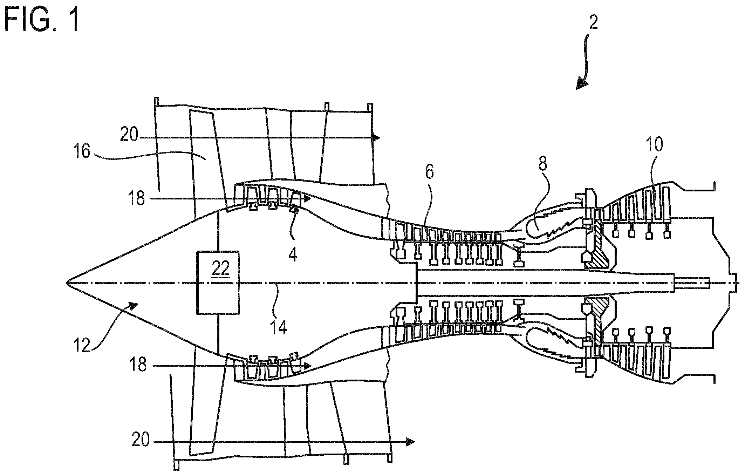

La figure 1 représente de manière simplifiée une turbomachine axiale. Il s'agit dans ce cas précis d'un turboréacteur double-flux. Le turboréacteur 2 comprend un premier niveau de compression, dit compresseur basse-pression 4, un deuxième niveau de compression, dit compresseur haute-pression 6, une chambre de combustion 8 et un ou plusieurs niveaux de turbines 10.

En fonctionnement, la puissance mécanique de la turbine 10 transmise via l'arbre central jusqu'au rotor 12 met en mouvement les deux compresseurs 4 et 6. Ces derniers comportent plusieurs rangées d' aubes de rotor associées à des rangées d'aubes de stators. La rotation du rotor 12 autour de son axe de rotation 14 permet ainsi de générer un débit d'air et de comprimer progressivement ce dernier jusqu'à l'entrée de la chambre de combustion 8.

Un ventilateur d'entrée communément désigné fan ou soufflante 16 est couplé au rotor 12 et génère un flux d'air qui se divise en un flux primaire 18 traversant les différents niveaux sus mentionnés de la turbomachine, et en un flux secondaire 20 traversant un conduit annulaire (partiellement représenté) le long de la machine pour ensuite rejoindre le flux primaire en sortie de turbine. La soufflante peut être du type non carénée, par exemple à double rotor contrarotatifs, éventuellement en aval.

Le flux secondaire peut être accéléré de sorte à générer une réaction de poussée utile au vol d'un aéronef. A titre d'exemple le turboréacteur peut présenter un taux de dilution de 12, ce taux pouvant correspondre, en fonctionnement et le cas échéant en vol, à la masse d'air du flux froid divisée par celle du flux chaud.

Une transmission 22 formant une démultiplication avec un rapport de réduction, tel un réducteur épicycloïdal, peut réduire la vitesse de rotation de la soufflante par rapport à la turbine associée.

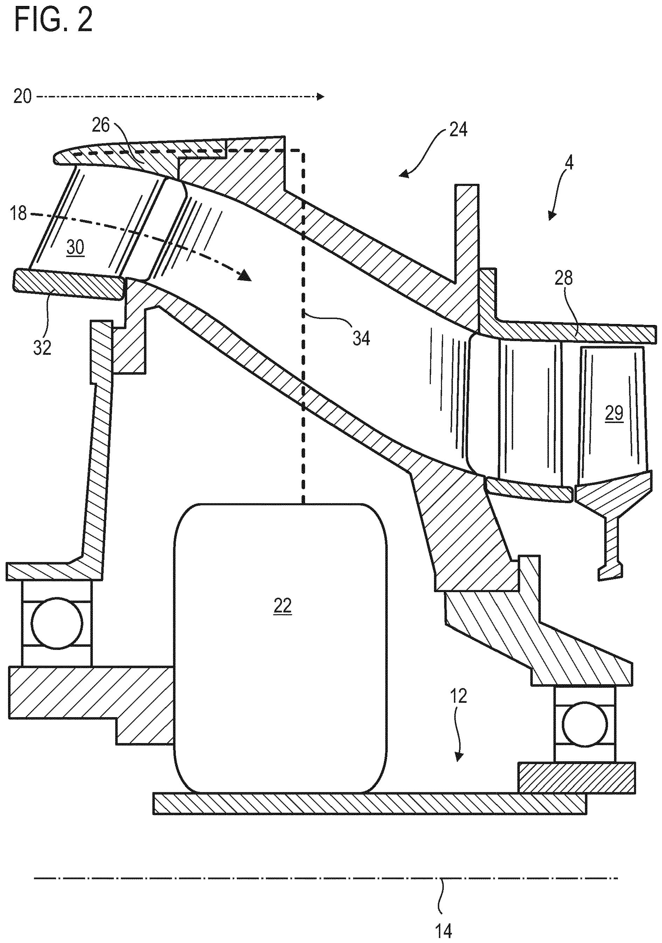

La figure 2 est une vue en coupe d'un carter support 24 de rotor 12 de turbomachine, la turbomachine pouvant être similaire à celle de la figure 1. On peut y observer une partie du compresseur basse-pression 4, la transmission 22, un bec de séparation 26 du flux primaire 18 et du flux secondaire 20.

Le compresseur basse pression peut généralement correspondre à celui décrit dans le document EP 3 018 295 A1, le carter support 24 étant alors disposé entre le carter externe 28 du compresseur et le bec de séparation 26. Les aubes rotoroiques 29 du rotor 12 du compresseur peuvent être entourées par le carter externe 28. Le rotor 12 ; ou du moins une de ses rangées d'aubes 29 peuvent former un disque aubagé monobloc ou un tambour aubagé monobloc.

La transmission 22 peut être couplée à la turbine basse pression. Elle peut permettre de réduire la vitesse de rotation de la soufflante par rapport à celle de la turbine basse pression. La vitesse du compresseur 4 peut être supérieure à celle de la soufflante, et optionnellement de la turbine basse pression, notamment grâce à une transmission à double train épicycloïdal, optionnellement à double sortie.

Le carter support 24 forme la structure, le châssis de la turbomachine. Il est adapté pour supporter l'effort de poussée de la soufflante, en plus de pouvoir porter le poids propre de la turbomachine. Il peut être désigné par l'acronyme FHF, pour l'expression anglo-saxonne « Fan Hub Frame ». Il peut être un carter intermédiaire. La transmission 22 peut être fixée au carter support 24. Elle peut être logée au moins partiellement dans une chambre ménagée dans le carter 24.

Le bec de séparation 26 comporte une rangée annulaire d'aubes statoriques 30 permettant d'y suspendre la virole interne 32 qui est d'ailleurs segmentée. La virole interne 32 est ainsi divisée en plusieurs segments répartis sur un cercle. Ces segments sont séparés selon des jeux circonférentiels (non visibles), également appelé jeux angulaires. Ces jeux sont distribués autour de l'axe de rotation 14. A l'arrêt, les segments de virole interne sont écartés les uns des autres, c'est-à-dire qu'ils peuvent être libre de contact les uns-des autres. En fonctionnement, les segments se rapprochent, éventuellement jusqu'à venir se toucher les uns les autres au niveau de leurs extrémités selon la circonférence.

La virole interne 32 peut entourer la transmission 22, et/ou en être distance axialement. Cette dernière peut être associée à un circuit de refroidissement 34. Ce circuit 34 peut comprendre un fluide caloporteur, par exemple de l'huile qui permet de refroidir et d'évacuer au moins 50 kW en fonctionnement. En employant de l'huile, le circuit 34 peut devenir un circuit de lubrification, ce qui lui confère une deuxième fonction.

Le circuit de refroidissement 34 coopère thermiquement avec le bec de séparation 26. Il peut le réchauffer afin de l'opposer à la formation de givre au contact des flux (18 ; 20). Dès lors le bec de séparation 26 devient un échangeur de chaleur utile au refroidissement au circuit 34. Cet échange de chaleur permet de déformer le bec 26. La déformation peut se produire au niveau d'une virole externe, et/ou des aubes statoriques 30 et/ou de la virole interne 32. La déformation peut résulter d'une dilatation et/ou d'un changement de configuration d'un matériau à mémoire de forme employé pour réaliser les viroles interne et externe comme les aubes 30.

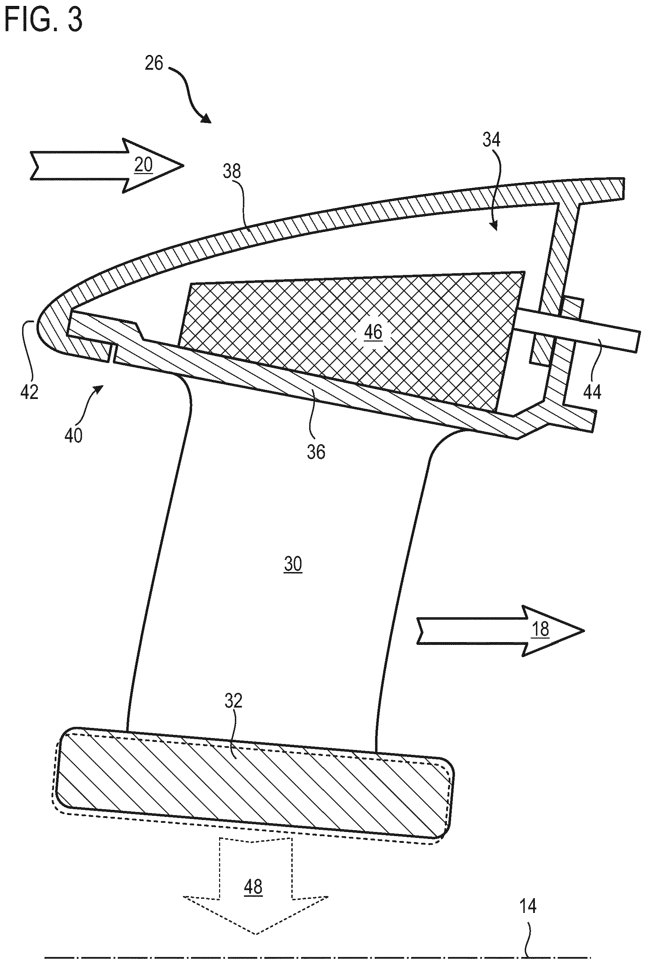

La figure 3 est un agrandissement d'une partie de la figure 2. La virole interne 32 est représentée en trait pleins dans une première position, par exemple lorsque la turbomachine est à l'arrêt, et en traits pointillés dans une deuxième position, par exemple lorsque la turbomachine fonctionne et que le bec de séparation 26 suit une déformation interne. La déformation peut comprendre un changement de diamètre.

Le bec de séparation 26 comporte une virole externe 36 fixée à une paroi externe 38 de forme annulaire. Leur interface de fixation peut être un crochet annulaire 40. Un bord de séparation 42 circulaire peut être formé en amont, donc sur la paroi externe 38. Ce bord de séparation 42 forme la ligne de partage circulaire entre le flux primaire 18 et le flux secondaire 20. Les aubes statoriques 30 s'étendent radialement vers l'intérieur depuis la virole externe 36.

La virole externe 36 et/ou les aubes 30 sont réalisées en matériaux métalliques. Alternativement ou optionnellement, la virole externe 36 et/ou les aubes 30 sont réalisées en matériaux à mémoire de forme. La virole externe 36 peut être réalisée en matériau composite à matrice organique et à fibre de carbone afin de l'alléger et de réduire son coefficient de dilatation, les aubes pouvant être métalliques. Les aubes statoriques 30 peuvent comprendre un coefficient de dilatation d'au moins : 10^(-6), ou 2,50*10^(-5) K^(-1).

La hauteur radiale de la veine du flux primaire 18 peut varier axialement. Dès lors, la déformation que pilotent les aubes 30 peut devenir complexe si bien que chaque segment suit un basculement selon un axe perpendiculaire à l'axe de rotation 14 ; en plus d'un déplacement radial 48.

Le bec de séparation 26 loge partiellement le circuit de refroidissement 34 qui peut inclure une conduite 44 et un échangeur de chaleur 46. Ce dernier peut être en contact thermique avec les aubes 30 et/ou la virole externe 36, par exemple lorsque les aubes 30 traversent la virole externe 36. Dès lors, le circuit 34 parvient à apporter des calories aux aubes. En réponse, la virole et/ou les aubes peuvent se déformer, par exemple se dilater. En alternative, elles peuvent suivre un changement d'état lorsqu'elles sont réalisées en matériau à mémoire de forme.

Le circuit 34 peut se prolonger à l'intérieur des aubes 30 et/ou de la virole interne 32, et donc dans ses segments. Ainsi, les calories échangées avec le circuit 34 peuvent conduire à une déformation des aubes 30 et/ou des segments de virole interne 32. Les déformations peuvent être localisées. Elles peuvent être des dilatations et/ou des changements de forme du matériau de à mémoire de forme des aubes et/ou des segments.

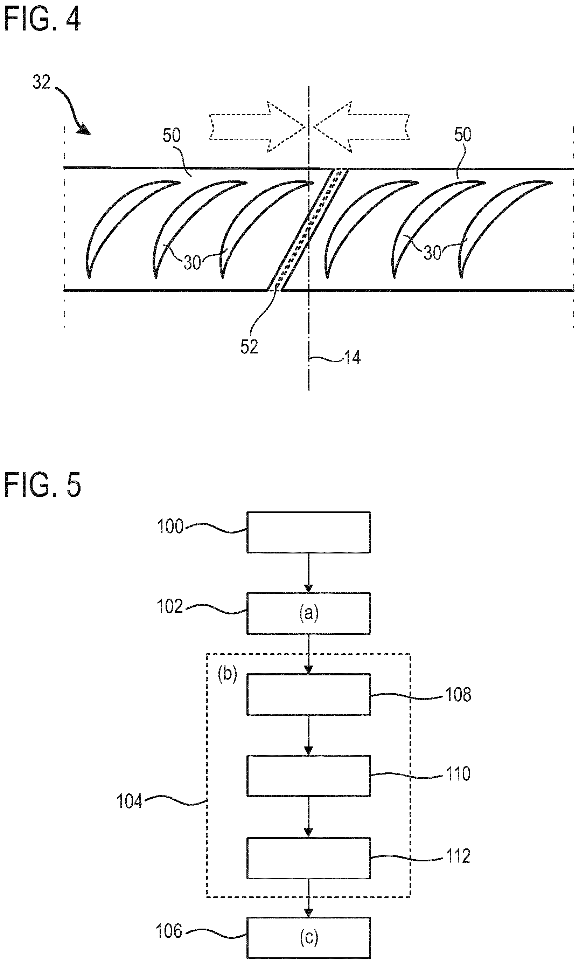

La figure 4 représente deux segments 50 de virole interne 32 séparés par un jeu circonférentiel 52, par exemple incliné par rapport à l'axe de rotation 14. Les segments 50 et le jeu 52 sont représentatifs de l'ensemble de la virole, où les jeux et les segments forment une alternance. Les segments et les jeux peuvent correspondre à ceux décrit en relation avec la figure 3. A nouveau, les segments 50 de virole sont représentés en trait plein dans la première position, et en trait pointillé dans la deuxième position.

Entre la première et la deuxième position, les segments 50 se rapprochent l'un de l'autre ; plus précisément leurs extrémités 54 selon la circonférence se rapprochent. Optionnellement, ces extrémités 54 peuvent se toucher. En conséquence du rapprochement, respectivement du contact, chaque jeu circonférentiel 52 peut se fermer, et éventuellement devenir étanche. Dès lors les fuites qui auraient pu s'y engouffrer sont bloquées. Un gain de rendement est permis puisque l'augmentation de pression produite au travers des aubes statorisques 30 augmente.

La fermeture des jeux circonférentiels 52 peut notamment résulter d'un allongement circonférentiels des segments 50, ou encore de leur déformation. La réduction des jeux 52 peut obéir à un changement de configuration d'aubes 30 poussant circonférentiellement les segments 50, les aubes 30 deviennent alors des actionneurs. Ou encore, ceci peut être conduit par une modification de la courbure des segments. Lors de la déformation, la virole interne peut garder un diamètre constant.

La figure 5 est un diagramme d'un procédé de contrôle de jeux circonférentiels entre des segments de virole interne de turboréacteur. Le turboréacteur peut correspondre à celui décrit an travers des figures 1 à 4.

Le procédé peut comprendre les étapes suivantes :
démarrage 100 ;
(a) fonctionnement 102 de la turbomachine,
(b) échange thermique 104 entre le circuit de refroidissement et au moins un des éléments choisi parmi les aubes, la virole interne, et la virole externe ; puis
(c) arrêt du turboréacteur 106, où les jeux circonférentiels sont davantage ouverts que lors de l'étape (b) échange thermique 104.

Lors de l'étape (b) échange thermique 104, les jeux circonférentiels entre les segments de virole interne diminuent, et se ferment éventuellement de manière étanche. Pour rappel ceci peut être produit par dilatation et/ou par changement de forme d'un matériau à mémoire de forme, ou par déformation forcée par un élément du bec de séparation. Ceci s'applique aux segments de la virole interne, les aubes ou la virole externe.

L'étape (b) échange thermique 104 peut se décomposer en au moins trois phases, dont une phase parking 108, une phase décollage 110, et une phase vol de croisière 112. Ces phases peuvent correspondre à des modes d'évolution d'un aéronef. Bien entendu, pendant l'étape (b) échange thermique 104, l'étape (a) fonctionnement 102 continue de se dérouler. Ces étapes peuvent donc se chevaucher. Selon l'invention, les jeux peuvent rester dans la première position lors de la phase parking 108, et dans une deuxième position lors de la phase décollage 110 et/ou de la phase vol de croisière 112. Ceci permet de choisir à quel moment il est opportun de fermer les jeux, et donc d'obtenir le rendement maximal malgré l'existence de plusieurs configurations thermiques.

## Revendications

1. Ensemble pour turbomachine axiale (2), notamment pour turboréacteur, l'ensemble comprenant :
- une virole externe (36) et une virole interne (32) coaxiales, la virole interne (32) étant segmentée et comprenant des jeux circonférentiels (52) entre ses segments (50) ;
- une rangée annulaire d'aubes (30) reliant la virole interne (32) à la virole externe (36);
- une transmission (22) à rapport de réduction destinée à être couplée à une soufflante (16) ;
**caractérisé en ce qu'**il comprend en outre
un circuit de refroidissement (34) de la transmission (22) configuré pour réchauffer au moins la virole externe (36) lors du fonctionnement de la turbomachine de sorte à réduire circonférentiellement les jeux circonférentiels (52) entre les segments (50).

2. Ensemble selon la revendication 1, **caractérisé en ce qu'**il comprend un bec de séparation (26) circulaire auquel la virole externe (36) est fixée, le circuit de refroidissement (34) étant configuré pour dégivrer ledit bec de séparation (26).

3. Ensemble selon l'une des revendications 1 à 2, **caractérisé en ce que** la virole externe (36) comprend un matériau composite avec une résine organique et des fibres, notamment des fibres de carbone et/ou des fibres de verre.

4. Ensemble selon l'une des revendications 1 à 3, **caractérisé en ce qu'**au moins une ou plusieurs aubes (30) sont métalliques et/ou à mémoire de forme.

5. Ensemble selon l'une des revendications 1 à 4, **caractérisé en ce que** le circuit de refroidissement (34) est configuré pour réchauffer les aubes (30).

6. Ensemble selon l'une des revendications 1 à 5, **caractérisé en ce que** le circuit de refroidissement (34) comprend un échangeur de chaleur (46), notamment en contact thermique avec les aubes (30) et/ou avec la virole externe (36).

7. Ensemble selon l'une des revendications 1 à 6, **caractérisé en ce qu'**au moins un ou chaque jeu circonférentiel (52) forme généralement une droite inclinée dans l'espace par rapport à l'axe de rotation (14) de la turbomachine selon deux angles.

8. Ensemble selon l'une des revendications 1 à 7, **caractérisé en ce que** la virole interne (32) présente une surface annulaire externe avec une variation de diamètre, et/ou les aubes (30) présentent une variation de hauteur radiale d'amont en aval.

9. Turboréacteur (2), notamment un turboréacteur double flux, comprenant un ensemble, **caractérisé en ce que** l'ensemble est conforme à l'une des revendications 1 à 8, le turboréacteur (2) comprenant notamment une soufflante (16) et un compresseur (4).

10. Turboréacteur (2) selon la revendication 9, **caractérisé en ce qu'**il comprend un carter (24) supportant la soufflante (16) et la virole externe (36), la transmission (22) étant éventuellement disposée dans ledit carter (24).

11. Turboréacteur (2) selon l'une des revendications 9 à 10, **caractérisé en ce que** la transmission (22) est couplée à la soufflante (16) et au compresseur (4), la vitesse de rotation du compresseur (4) étant supérieure à la vitesse de rotation de la soufflante (16).

12. Turboréacteur (2) selon l'une des revendications 9 à 11, **caractérisé en ce qu'**il présente un taux de dilution supérieur ou égal à : 5, ou 10, ou 15.

13. Procédé de contrôle de jeux circonférentiels (52) entre des segments (50) de virole interne (32) de turboréacteur, le turboréacteur comprenant un ensemble qui comporte : une transmission (22) à rapport de réduction entrainant une soufflante (16), une virole interne segmentée par des jeux circonférentiels (52), une virole externe (36) et une rangée annulaire d'aubes (30) reliant la virole interne (32) à la virole externe (36), le procédé comprenant une étape (a) fonctionnement (102) de la turbomachine, et une étape (b) échange thermique (104), **caractérisé en ce que** la turbomachine comprend également un circuit d'échange thermique avec la transmission (22), la virole externe (36) et/ou les aubes (30) ; lors de l'étape (b) échange thermique (104) le circuit (34) permet de modifier les jeux circonférentiels (52) entre les segments (50) de virole interne (32), l'ensemble étant éventuellement conforme à l'une des revendications 1 à 8, et/ou le turboréacteur étant éventuellement conforme à l'une des revendications 9 à 12.

14. Procédé selon la revendication 13, **caractérisé en ce que** lors de l'étape (b) échange thermique (104), les jeux circonférentiels (52) sont fermés ; notamment par dilatation et/ou par changement de forme d'un matériau à mémoire de forme ; les segments (50) se touchant éventuellement selon la circonférence.

15. Procédé selon l'une des revendications 13 à 14, **caractérisé en ce que** le procédé comprend en outre une étape (c) arrêt du turboréacteur (106), les jeux circonférentiels (52) étant davantage ouverts lors de l'étape (c) arrêt que lors de l'étape (b) échange thermique (104).

## Patentansprüche

1. Baugruppe für eine axiale Turbomaschine (2), insbesondere für ein Strahltriebwerk, wobei die Baugruppe umfasst:
- eine externe Hülle (36) und eine interne Hülle (32), die koaxial zueinander sind, wobei die interne Hülle (32) segmentiert ist und umfängliche Spiele (52) zwischen ihren Segmenten (50) umfasst;
- eine ringförmige Reihe von Schaufeln (30), die die interne Hülle (32) mit der externen Hülle (36) verbinden;
- ein Untersetzungsgetriebe (22), das dazu vorgesehen ist, mit einem Gebläse (16) gekoppelt zu sei;
**gekennzeichnet dadurch, dass** sie weiter umfasst
einen Kühlkreislauf (34) des Getriebes (22), der dazu konfiguriert ist, zumindest die externe Hülle (36) während des Betriebs der Turbomaschine aufzuheizen, derart, um umfänglich die umfänglichen Spiele (52) zwischen den Segmenten (50) zu reduzieren.

2. Die Baugruppe gemäß Anspruch 1, **gekennzeichnet dadurch, dass** sie einen ringförmigen Teiler (26) umfasst, an dem die externe Hülle (36) befestigt ist, wobei der Kühlkreislauf (34) dazu konfiguriert ist, den besagten ringförmigen Teiler (26) zu enteisen.

3. Die Baugruppe gemäß einem der Ansprüche 1 bis 2, **gekennzeichnet dadurch, dass** die externe Hülle (36) ein Kompositmaterial umfasst mit einem organischen Harz und Fasern, insbesondere Kohlenstofffasern und/oder Glasfasern.

4. Die Baugruppe gemäß einem der Ansprüche 1 bis 3, **gekennzeichnet dadurch, dass** zumindest eine oder mehrere der Schaufeln (30) aus einem Metall und/oder aus Formgedächtnismaterial sind.

5. Die Baugruppe gemäß einem der Ansprüche 1 bis 4, **gekennzeichnet dadurch, dass** der Kühlkreislauf (34) dazu konfiguriert ist, die Schaufeln (30) aufzuheizen.

6. Die Baugruppe gemäß einem der Ansprüche 1 bis 5, **gekennzeichnet dadurch, dass** der Kühlkreislauf (34) einen Wärmetauscher (46) umfasst, insbesondere in thermischem Kontakt mit den Schaufeln (30) und/oder der externen Hülle (36).

7. Die Baugruppe gemäß einem der Ansprüche 1 bis 6, **gekennzeichnet dadurch, dass** zumindest eines oder jedes umfängliche Spiel (52) im Wesentlichen eine Gerade ausbildet, die im Raum bezüglich der Rotationsachse (14) der Turbomaschine gemäß zwei Winkeln geneigt ist.

8. Die Baugruppe gemäß einem der Ansprüche 1 bis 7, **gekennzeichnet dadurch, dass** die interne Hülle (32) eine ringförmige externe Oberfläche mit einem veränderlichen Durchmesser hat und/oder dass die Schaufeln (30) eine Veränderung der radialen Höhe von stromaufwärts nach stromabwärts haben.

9. Strahltriebwerk (2), insbesondere Strahltriebwerk mit einem dualen Fluss, umfassend eine Baugruppe, **gekennzeichnet dadurch, dass** die Baugruppe gemäß einem der Ansprüche 1 bis 8 ist, wobei das Strahltriebwerk (2) insbesondere ein Gebläse (16) und einen Kompressor (4) umfasst.

10. Das Strahltriebwerk (2) gemäß Anspruch 9, **gekennzeichnet dadurch, dass** es ein Gehäuse (24) umfasst, das das Gebläse (16) und die externe Hülle (36) trägt, wobei das Getriebe (22) gegebenenfalls in dem besagten Gehäuse (24) angeordnet ist.

11. Das Strahltriebwerk (2) gemäß einem der Ansprüche 9 bis 10, **gekennzeichnet dadurch, dass** das Getriebe (22) mit dem Gebläse (16) und dem Kompressor (4) gekoppelt ist, wobei die Rotationsgeschwindigkeit des Kompressors (4) größer ist als die Rotationsgeschwindigkeit des Gebläses (16).

12. Das Strahltriebwerk (2) gemäß einem der Ansprüche 9 bis 11, **gekennzeichnet dadurch, dass** es ein Nebenstromverhältnis größer oder gleich 5 oder 10 oder 15 hat.

13. Verfahren zur Steuerung der umfänglichen Spiele (52) zwischen Segmenten (50) der internen Hülle (32) eines Strahltriebwerks, wobei das Strahltriebwerk eine Baugruppe aufweist, die umfasst: ein Untersetzungsgetriebe (22), das ein Gebläse (16) antreibt, eine interne Hülle, die durch umfängliche Spiele (52) segmentiert ist, eine externe Hülle (36) und eine ringförmige Reihe von Schaufeln (30), die die interne Hülle (32) mit der externen Hülle (36) verbinden, wobei das Verfahren einen Schritt (a) Betrieb (102) der Turbomaschine und einen Schritt (b) Wärmetauschen (104) umfasst, **gekennzeichnet dadurch, dass** die Turbomaschine auch einen Kreislauf zum Wärmeaustausch mit dem Getriebe (22), der externen Hülle (36) und/oder den Schaufeln (30) umfasst, wobei der Kreislauf (34) es bei dem Schritt (b) des Wärmeaustausches erlaubt, die umfänglichen Spiele (52) zwischen den Segmenten (50) der internen Hülle (32) zu verändern, wobei die Baugruppe gegebenenfalls gemäß einem der Ansprüche 1 bis 8 ist und/oder wobei das Strahltriebwerk gegebenenfalls gemäß einem der Ansprüche 9 bis 12 ist.

14. Verfahren gemäß Anspruch 13, **gekennzeichnet dadurch, dass** während des Schrittes (b) des Wärmetauschens (104) die umfänglichen Spiele (52) geschlossen sind; insbesondere durch Ausdehnung und/oder durch Veränderung der Form eines Formgedächtnismaterials; wobei die Segmente (50) einander umfänglich gegebenenfalls berühren.

15. Verfahren gemäß einem der Ansprüche 13 bis 14, **gekennzeichnet dadurch, dass** das Verfahren weiter einen Schritt (c) des Anhaltens des Strahltriebwerks (106) umfasst, wobei die umfänglichen Spiele (52) vorzugsweise während des Schrittes (c) des Anhaltens offen sind statt während des Schrittes (b) des Wärmetauschens (104).

## Claims

1. Assembly for an axial turbine engine (2), particularly for a turbojet, the assembly comprising:
- an external shroud (36) and an internal shroud (32) that are coaxial to each other, the internal shroud (32) being segmented and comprising circumferential clearances (52) between the segments (50) thereof;
- an annular row of blades (30) connecting the internal shroud (32) to the external shroud (36);
- a reduction ratio drive (22) intended to be coupled to a fan (16);
**characterized in that** it further comprises
a cooling circuit (34) for the drive (22), which circuit is configured to heat up at least the external shroud (36) during the operation of the turbine engine such as to circumferentially reduce the circumferential clearances (52) between the segments (50).

2. Assembly according to claim 1, **characterized in that** it comprises a circular splitter (26) to which the external shroud (36) is fixed, the cooling circuit (34) being configured to de-ice said splitter (26).

3. Assembly according to one of claims 1-2, **characterized in that** the external shroud (36) comprises a composite material with an organic resin and fibres, particularly carbon fibres and/or glass fibres.

4. Assembly according to one of claims 1-3, **characterized in that** at least one or more blades (30) are made of metal and/or are shape-memory blades.

5. Assembly according to one of claims 1-4, **characterized in that** the cooling circuit (34) is configured to heat up the blades (30).

6. Assembly according to one of claims 1-5, **characterized in that** the cooling circuit (34) comprises a heat exchanger (46), particularly in thermal contact with the blades (30) and/or with the external shroud (36).

7. Assembly according to one of claims 1-6, **characterized in that** at least one or each circumferential clearance (52) generally forms a straight line, inclined in space with respect to the axis of rotation (14) of the turbine engine according to two angles.

8. Assembly according to one of claims 1-7, **characterized in that** the internal shroud (32) has an external annular surface with a varying diameter and/or the blades (30) have a radial height variation from upstream to downstream.

9. Turbojet (2), particularly a dual flow jet engine, comprising an assembly, **characterized in that** the assembly is in accordance with one of claims 1-8, in particular the turbojet (2) comprising a fan (16) and a compressor (4).

10. Turbojet (2) according to claim 9, **characterized in that** it comprises a housing (24) supporting the fan (16) and the external shroud (36), the drive (22) being possibly placed in said housing (24).

11. Turbojet (2) according to one of claims 9-10, **characterized in that** the drive (22) is coupled to the fan (16) and to the compressor (4), the rotation speed of the compressor (4) being greater than the rotation speed of the fan (16).

12. Turbojet (2) according to one of claims 9-11, **characterized in that** it has a bypass ratio greater than or equal to: 5, or 10, or 15.

13. Method for controlling the circumferential clearances (52) between turbojet internal shroud (32) segments (50), the turbojet comprising an assembly which includes: a reduction ratio drive (22) driving a fan (16), an internal shroud segmented by circumferential clearances (52), an external shroud (36) and an annular row of blades (30) connecting the internal shroud (32) to the external shroud (36), the method comprising a step (a) of operation (102) of the turbine engine, and a step (b) of heat exchange (104), **characterized in that** the turbine engine also comprises a circuit for heat exchange with the drive (22), the external shroud (36) and/or the blades (30); during the step (b) for heat exchange (104), the circuit (34) makes it possible to modify the circumferential clearances (52) between the internal shroud (32) segments (50), the assembly being possibly in accordance with one of claims 1-8, and/or the turbojet being possibly in accordance with one of claims 9-12.

14. Method according to claim 13, **characterized in that**, during the step (b) for heat exchange (104), the circumferential clearances (52) are closed; particularly by expansion and/or by a change in shape of a shape-memory material; the segments (50) possibly touching one another along the circumference.

15. Method according to one of claims 13-14, **characterized in that** the method further comprises a step (c) of stopping the turbojet (106), the circumferential clearances (52) being open to a greater extent during the stopping step (c) than during the step (b) for heat exchange (104).
